# EUROPÄISCHE PATENTSCHRIFT

(11) **EP 1 344 952 B1**
(45) Veröffentlichungstag und Bekanntmachung des Hinweises auf die Patenterteilung: **07.06.2006**
(21) Anmeldenummer: 03004584.3
(22) Anmeldetag: 28.02.2003
(51) Int. Cl.: F16C 11/06

(54) **Kugelgelenklager**
Ball joint
Articulation à rotule

(30) Priorität: 05.03.2002 DE 10209757
(43) Veröffentlichungstag der Anmeldung: 17.09.2003
(73) Patentinhaber: DEERE & COMPANY, Moline, Illinois 61265-8098 (US)
(72) Erfinder: Heitlinger, Martin, 76684 Östringen-Odenheim (DE); Zahn, Werner, 67454 Hassloch (DE)
(74) Vertreter: Magin, Ludwig Bernhard

(56) Entgegenhaltungen:
- US-A- 1 065 483
- US-A- 3 146 008
- US-A- 3 276 798
- US-A- 5 755 526
- US-A- 6 113 301

## Beschreibung

Die Erfindung betrifft ein Kugelgelenklager, welches einen mit einer Kugel versehenen Kugelzapfen und eine Kugelpfanne enthält.

Der Stand der Technik gibt eine Vielzahl von Anwendungsfällen an, in denen unterschiedlichste Ausführungen von Kugelgelenklager bzw. Kugelgelenken offenbart sind. Dabei werden verschiedene Lösungen vorgeschlagen, einen Kugelzapfen mit einem Lagergehäuse oder einer Lagerschale bzw. einer Kugelpfanne zu verbinden. Je nach Anwendung werden meist Kugelgelenke mit verformbaren Gleitschalen verwendet, die durch ein Gehäuse und/oder Sicherungselemente fixiert werden.

In der DE 198 50 423 A1 wird ein Kugelgelenk offenbart, das aus einer in einer elastischen Gleitschale aufgenommenen Kugel eines Kugelzapfens und einem Gehäuse besteht, wobei die Gleitschale von dem Gehäuse zusammengehalten wird und die Kugel durch ein in der Gleitschale aufgenommenes Fixierungselement zusätzlich lagefixiert ist. Auch das in der DE 199 52 472 A1 offenbarte Kugelgelenk weist eine elastische Gleitschale auf, die durch einen metallischen Lagergehäusering stabilisiert wird. Ein weiteres Kugelgelenk dieser Art wird in der DE 43 44 628 C1 offenbart. Hier wird ebenfalls eine Gleitschale verwendet, die eine Kugel eines Kugelzapfens aufnimmt, wobei die Gleitschale durch ein steifes Lagergehäuse umschlossen wird und durch ein Sicherungsring in dem Lagergehäuse fixiert wird.

Die DE 196 38 466 C1 zeigt hingegen die Ausführung eines Kugelgelenkes ohne Gleitschale. Eine Kugel eines Kugelzapfens wird hier direkt in einem metallischen Lagergehäuse gelagert. Ein Deckel verschließt hierbei das Lagergehäuse und sorgt zusätzlich als Spannelement für eine Lagefixierung im Lagergehäuse. Eine weitere Möglichkeit der Lagefixierung einer Kugelzapfenkugel in einer Lagerschale bzw. in einem Lagergehäuse offenbart die DE 44 30 163 A1. Hier wird ein Federmechanismus in Verbindung mit einem Verriegelungsschieber vorgeschlagen, der für einen festen Halt der Kugel innerhalb des Lagergehäuses sorgt.

Wie die Beispiele aus dem Stand der Technik zeigen, sind verschiedene Ausführungen von Kugelgelenken bzw. Kugelgelenkbaugruppen bekannt, die sich je nach Einsatzbereich in der Anzahl ihrer Bauteilen unterscheiden. Dabei ergeben sich die Einsatzbereiche im Wesentlichen aus den übertragbaren Kräften sowie aus den erforderlichen Freiheitsgraden bzw. aus den Einschränkungen der einzelnen Freiheitsgrade eines Kugelgelenkes. Bei der Übertragung hoher Kräfte ist z.B. der Einsatz von Gleitschalen, die aus elastischen Kunststoff bestehen, aus Verschleißgründen nur begrenzt möglich. Der Verzicht auf elastische Komponenten in einem Kugelgelenklager bzw. in einer Kugelgelenkbaugruppe führt wiederum zu aufwändigeren Konstruktionen unter Einsatz mehrerer Bauteile bzw. zu aufwändigen Verfahren zur Herstellung von Kugelgelenklager.

Ein für große Axial- und Radialkräfte geeignetes Kugelgelenklager bzw. ein Verfahren zur Herstellung eines solchen, wird in der DE 34 19 871 A1 offenbart. Es wird ein Herstellungsverfahren vorgestellt, bei dem ein zweiteiliges Kugelgelenk, bestehend aus einem Kugelring und einem Lageraußenring, durch ein Kaltumformprozess zusammengefügt wird. Derartige Kugelgelenklager sollen beispielsweise bei den Unterlenkern einer Dreipunktanbauvorrichtung eines Schleppers verwendet werden. Der Kugelring dient hierbei zur Aufnahme eines Zapfens oder Bolzens, der eine Verbindung des Unterlenkers mit einem landwirtschaftlichen Gerät bzw. mit einer Stabilisierungsstrebe herstellt.

Nachteilig wirkt sich hierbei aus, dass der Kugelring und der Lageraußenring nach dem Kaltumformprozess nur durch hohen technischen Aufwand demontierbar sind und das zur Verbesserung der Festigkeitseigenschaften und zur Beseitigung von Spannungen zwischen Kugelring und Lagerring, aufwändige Wärmebehandlungsverfahren im montierten Zustand erforderlich sind. Um den Anforderungen bei hohen Scherkräften genügen zu können, muss die Ausbildung von Kugelringen in Verbindung mit Zapfen und/oder Bolzen stabil ausgeführt werden. Dies führt zu verhältnismäßig großen Querschnitten der Bauteile. Diese Querschnitte begrenzen die Bewegung der Lagerteile. So wird beispielsweise die mögliche Hubhöhe eines an einen Hubzylinder angelenkten Unterlenkers einer Fahrzeuganbauvorrichtung durch die ausladende Bauweise reduziert.

Bei der US-A-1 065 483 werden die vorgenannten Probleme überwunden, insbesondere ist die Anzahl der für das Kugelgelenklager verwendeten Bauteile reduziert und sowohl die Montage als auch die Demontage der Bauteile können ohne hohen technischen Aufwand durchgeführt werden.

Beide Bauteile haben eine aufeinander abgestimmte Formgebung. Diese Formgebung ist für eine Montagestellung und für eine Arbeitsstellung beider Bauteile optimierbar. Die Kugel mit ihrer Abtragung und die Montageöffnung der Kugelpfanne sind derart ausgebildet, dass die Kugel bei geeigneter Orientierung (Montagestellung) durch eine axiale Fügebewegung in die Montageöffnung einführbar ist bis sie im Hohlraum mit den sphärischen Teilfläche zur Anlage kommt. Anschließend lässt sich der Kugelzapfen (beispielsweise um 90°) um seine Achse in eine Arbeitsstellung verdrehen, in der sich eine axiale Lagefixierung ergibt.

Damit sind besondere Mittel zur Lagefixierung entbehrlich. Zur Ausbildung des Kugelgelenks sind lediglich zwei Bauteile erforderlich. Sicherungselemente, wie Sicherungsstifte und dergleichen sind nicht erforderlich. Die Montage der beiden Bauteile kann durch einfache Axial- und Drehbewegung ohne Werkzeug erfolgen. Herstellungsaufwand und Montagezeiten lassen sich gegenüber bekannten Gelenkverbindungen erheblich reduzieren. Das Lagerspiel lässt sich klein halten. Das Kugelgelenklager kann vergleichsweise hohe Kräfte aufnehmen, es nimmt einen kleinen Bauraum ein und erfüllt die geforderte Gesamtfunktion.

In der Arbeitsstellung lässt sich der Kugelzapfen zwar gegenüber der Kugelpfanne in bestimmten Grenzen räumlich bewegen, insbesondere verschwenken und verdrehen. Es ist jedoch nicht möglich die Kugel axial aus der Kugelpfanne herauszuziehen. In einem gewissen räumlichen Schwenkbereich können über den vorhandenen Formschluss Kräfte durch die Teilepaarung übertragen werden.

Bei wenigstens einer Abtragung an der Kugel wird bewirkt, dass das Abmaß der Kugel in wenigstens einer vorgegebenen Richtung reduziert ist. Gleichzeitig bleibt jedoch ein Bereich der Kugeloberfläche erhalten, der als Lager- bzw. Stützfläche dient. Durch eine auf die Abtragung angepasste Montageöffnung der Kugelpfanne wird es ermöglicht, dass die Kugel bzw. der reduzierte Kugelkörper in einer Fügerichtung in eine definierte Einsetzposition in das Innere der Kugelpfanne gebracht werden kann. Durch Verdrehen der Kugel, in einer Ebene senkrecht zur Fügerichtung, aus dieser Einsetz- oder Montageposition heraus, gelangt der als Lager- bzw. Stützfläche dienende Teilbereich der Kugel in den durch eine restliche Ummantelung der Kugelpfanne geschlossenen sphärischen Teilbereich der Kugelpfanne. Dadurch, dass im Bereich der Abtragung keine Überdeckung der sphärischen Kugelpfannenummantelung mit Kugelkörperbereichen stattfindet, wird eine vorgebbare Einsetzposition geschaffen. Erst durch Verdrehen der Kugel stellt sich eine zunehmende Überdeckung von Kugelpfannenummantelung mit dem reduzierten Kugelkörper ein, wodurch der Kugelzapfen gehalten und in eine axial festgelegte Lager- bzw. Stützposition gebracht wird. Entsprechend der Abtragung auf der Kugel bzw. entsprechend des verbleibenden sphärischen Teilbereichs der Kugelpfannenummantelung, ist die Kugel bzw. der Kugelzapfen in der Kugelpfanne kippbar und begrenzt verdrehbar gelagert bzw. abgestützt.

Die Kugel ist mit zwei Abtragungen versehen. Dadurch lässt sich der Querschnitt der Montageöffnung der Kugelpfanne kleiner ausbilden, so dass größere sphärische Bereiche der Kugelpfannenummantelung erhalten bleiben und mehrere Teilbereiche der Kugelpfanne als Lager- bzw. Stützfläche ausgenutzt werden. Vorzugsweise sind bei Lager- bzw. Stützkräften, die entgegengesetzt zueinander und quer zur Kugelzapfenachse wirken, die zwei Abtragungen auf der Kugel vorgesehen, die parallel zueinander verlaufen und bezüglich des Kugelmittelpunktes spiegelsymmetrisch zueinander angeordnet sind.

Die Übertragung hoher axialer Kräfte in wenigstens einer Wirkrichtung bei möglichst kleiner Baugröße bzw. querschnittsarmer Bauweise soll nach der Erfindung realisiert werden, wobei eine wirtschaftliche Herstellung des gesamten Kugelgelenklagers gegeben sein soll.

Diese Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Das Kugelgelenklager erfindungsgemäß durch die Merkmale des Anspruchs 1 definiert des Anspruchs 1 definiert.

Es sind auch andere Ausrichtungen der Abtragungen ausführbar, wobei diese beispielsweise unterschiedliche Abstände zum Kugelmittelpunkt aufweisen. Durch die verbleibenden Kugeloberflächen entsteht hierbei ein Lager- bzw. Stützbereich, der sich aus unterschiedlich großen und zueinander unsymmetrischen Lager- oder Stützflächen der Kugelpfanne ergibt. Unsymmetrische bzw. außermittig versetzte Ausbildungen der Montageöffnung können besonders dann von Vorteil sein, wenn einseitige Lager- bzw. Stützkräfte aufgenommen werden sollen. Dies führt zu einer Vergrößerung der Kontaktfläche der Teilepaarung in einer Kraftrichtung. Die Flächenpressungen lässt sich hierdurch reduzierten.

Des Weiteren sind auch mehr als zwei Abtragungen an der Kugel denkbar, wobei jedoch der als Lager- bzw. Stützfläche nutzbare Bereich der verbleibenden Kugeloberfläche proportional mit der Gesamtfläche der Abtragungen abnimmt und dadurch der mögliche Schwenk- und/oder Drehwinkel des Kugelzapfens eingeschränkt wird.

In alternativen Ausführungsformen der Erfindung, sind die Abtragungen an der Kugel ebenflächig (planar) oder gewölbt ausgebildet. Die gewölbte Ausbildung kann den Vorteil haben, dass die geschlossenen sphärischen Teilbereiche der Kugelpfanne, das heißt die Bereiche der Kugelpfannenummantelung, welche die Lager- bzw. Stützflächen des reduzierten Kugelkörpers umgeben, größer ausgebildet werden können, so dass größere Lager- bzw. Stützflächen erzielt werden.

Die Größe der Montageöffnung sollte vorzugsweise so klein wie möglich ausgebildet sein, damit ein großer Bereich der Kugelpfanne als Lager- bzw. Stützfläche dient. Dies wird erreicht, indem die Montageöffnung einen Querschnitt aufweist, der im wesentlichen einem Querschnitt der Kugel entspricht, welcher senkrecht zu der wenigstens einen Abtragung bzw. der Kugelzapfenachse durch den Kugelmittelpunkt verläuft.

Bei der Erfindung liegt die Montageöffnung der Kugelpfanne außermittig bezüglich des Krümmungsmittelpunkts der sphärischen Teilflächen, so dass sich unterschiedlich große, als Lagerfläche dienende sphärische Teilbereiche ausbilden. Dies hat den Vorteil, dass die Lagerflächen an die jeweilige Lagerbelastung angepasst werden können. So kann bei überwiegend einseitigen Belastungen entsprechend der Belastungsrichtung, durch Verlagerung der Montageöffnung in eine bevorzugte Richtung, einseitig eine größere Lagerfläche in der Kugelpfanne erzeugt und dadurch die Flächenpressung reduziert werden. Die Montageöffnung bei der Erfindung muss allerdings größer ausgebildet werden, als eine mittige Montageöffnung, wie es in dem anschließend dargestellten Ausführungsbeispiel der Erfindung detailliert beschrieben ist.

Ein besonderer Vorteil der Erfindung ist darin zusehen, dass durch die oben genannten Eigenschaften ein Einsetzen der Kugel in die Kugelpfanne ermöglicht wird, ohne die Kugelpfannenummantelung zu öffnen. Somit kann die Kugelpfanne aus einem einteiligen Bauteil bestehen.

Durch Erhöhung der Festigkeitseigenschaften des Kugelzapfens bzw. der Kugel oder der Kugelpfanne, beispielsweise durch Härte- oder Wärmebehandlungsverfahren insbesondere der Kugelkontaktflächen, kann eine höhere zulässige Flächenpressung erzielt werden. Gängige Härteverfahren stellen z.B. thermo-chemische Randschichtverfahren dar, wie das Nitrocarburieren oder das Salzbadnitrocarburieren. Diese Verfahren können auch in Verbindung mit weiteren Verfahren, beispielsweise mit Oberflächenvergütungsverfahren zur Erhöhung der Korrosionsbeständigkeit angewendet werden. Durch diese Verfahren können auch die Reib- und Gleiteigenschaften der Kontaktflächen verbessert werden.

Der Kugelzapfen und die Kugelpfanne können aus Stahl hergestellt werden. In einer bevorzugten Ausgestaltung der Erfindung können die Verschleiß-, Festigkeits-, Oberflächen- und Reibeigenschaften der Kugel und/oder der Kugelpfanne durch Beschichtungen mit geeigneten Werkstoffen verbessert werden, wobei sogenannte Verbundwerkstoffe entstehen. Des Weiteren können in einer bevorzugten Ausgestaltung die Reib- bzw. Gleiteigenschaften des Kugelgelenklagers durch Gleitwerkstoffe, wie z.B. Messing oder Kunststoff und/oder durch Schmiermittel wie z.B. Schmierfette, die zwischen die Lager- oder Kontaktflächen eingebracht sind, verbessert werden.

In einigen Anwendungsfällen kann es wünschenswert sein, den Schwenkbereich des Kugelgelenklagers in eine oder mehrere Richtungen einzuschränken. Hierfür ist es von Vorteil, Erhebungen oder Anschläge im Bereich des Kugelzapfens anzubringen, die eine Schwenkbewegung der Kugelpfanne dadurch einschränken bzw. verhindern, dass der Kugelpfannenrand an die Erhebungen oder Anschläge stößt.

Das erfindungsgemäße Kugelgelenklager findet bevorzugt Anwendung bei Anbauvorrichtungen von landwirtschaftlichen Fahrzeugen, insbesondere bei Ackerschleppern. Es dient beispielsweise der Verbindung zwischen einer Stabilisierungsstrebe oder einem Hubzylinder einerseits und einem Unterlenker andererseits. Dabei kann der Kugelzapfenflansch an dem Unterlenker und die Kugelpfanne an der Stabilisierungsstrebe bzw. dem Hubzylinder befestigt werden. Bei einem weiteren Anwendungsgebiet dient das Kugelgelenklager der Verbindung eines Hubzylinders an dem Fahrzeugchassis, beispielsweise an dem Differentialgehäuse des Fahrzeugs.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: einen Querschnitt eines erfindungsgemäßen Kugelgelenklagers, mit einer Kugelpfanne, in der ein Kugelzapfen gelagert ist,

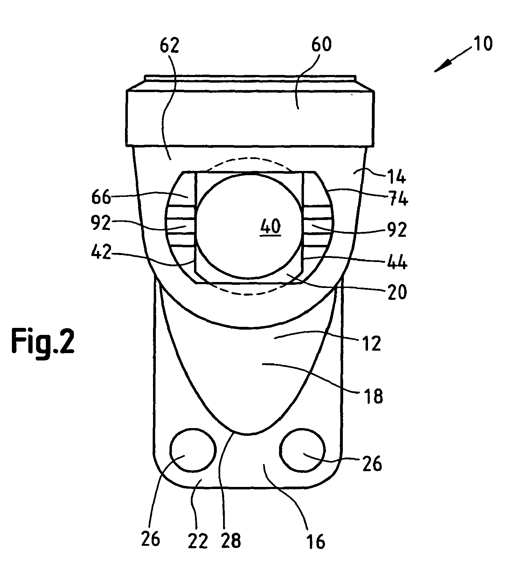

- Fig. 2: die Vorderansicht des Kugelgelenklagers gemäß Fig. 1, mit der Kugelpfanne und dem darin gelagerten Kugelzapfen,
- Fig. 3: einen Querschnitt des Kugelzapfens, wobei der Schnitt durch den Mittelpunkt der Kugel verläuft, und
- Fig. 4: eine Vorderansicht der Kugelpfanne,
- Fig. 5: eine Seitenansicht einer schematisch dargestellten Hubvorrichtung als Anwendungsbeispiel für das erfindungsgemäße Kugelgelenklager.

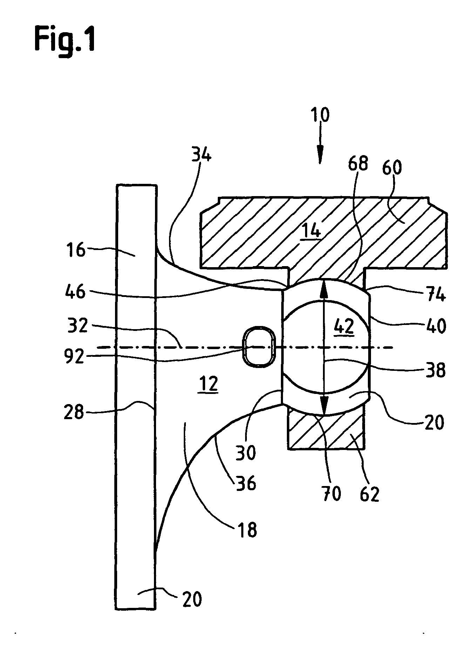

Fig. 1 zeigt ein Kugelgelenklager 10, bestehend aus einem Kugelzapfen 12 und einer Kugelpfanne 14. Der Kugelzapfen 12 ist einteilig ausgebildet und weist einen Kugelzapfenflansch 16, einen Kugelzapfenschaft 18 und eine Kugelzone 20 auf. Im Zusammenhang mit der vorliegenden Erfindung wird die Kugelzone 20 im folgenden der Einfachheit halber als Kugel 20 bezeichnet.

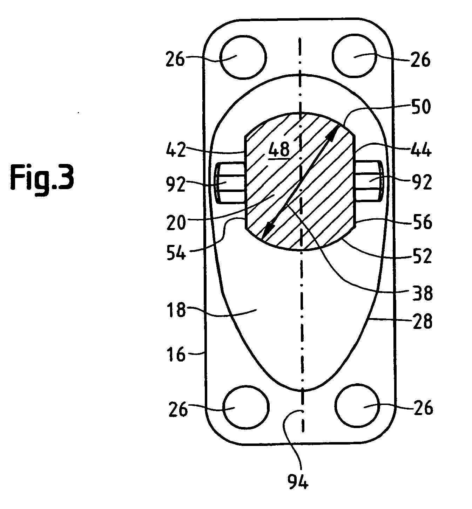

Der Kugelzapfenflansch 16 besteht, wie aus Fig. 3 hervorgeht, aus einer im wesentlichen rechteckförmigen Platte und dient der Montage des Kugelzapfens 12 an eine hier nicht gezeigte Rahmen- oder Tragwerkskonstruktion, beispielsweise an ein Fahrzeugchassis oder an einen Unterlenker einer Fahrzeuganbauvorrichtung. Zu diesem Zweck sind in den Eckbereichen der Platte Befestigungsbohrungen 26 vorgesehen.

Entsprechend Fig. 1 und Fig. 3 erstreckt sich der Kugelzapfenschaft 18 vom Kugelzapfenflansch 16 bis hin zur Kugel 20. Der Kugelzapfenschaft 18 besitzt auf der Seite des Kugelzapfenflansches 16 einen ovalförmigen ersten Querschnitt 28, und an der Seite der Kugel 20 einen kreisförmigen zweiten Querschnitt 30. Der Querschnitt des Kugelzapfenschaftes 18 verjüngt sich ausgehend vom Kugelzapfenflansch 16 bis zur Kugel 20 stetig und weist einen bogenförmigen oberen und bogenförmigen unteren konkaven Konturverlauf 34 bzw. 36 auf, wie es aus der Seitenansicht der Fig. 1 ersichtlich ist. Durch die bogenförmigen Konturverläufe 34 bzw. 36 ergibt sich ein "weicher" Übergang von dem Flansch des Kugelzapfens 12 zur Kugel 20. Dieser Übergang lässt sich aufgrund der sich in der Praxis ergebenden Lager- bzw. Stützkräfte optimieren.
Wie es aus Fig. 1 hervorgeht, ist an einem Ende des Kugelzapfenschafts 18 die Kugel 20 angeformt. Der Kugeldurchmesser 38 ist größer als der Durchmesser des zweiten kreisförmigen Querschnitts 30. Die Kugel 20 hat eine ebenflächige vordere Stirnabtragung 40. Des Weiteren weist die Kugel 20 keine geschlossene Kugelfläche auf, sondern enthält eine erste und eine zweite seitliche Abtragungen 42 und 44. Mit anderen Worten: auf zwei gegenüberliegenden Seiten der Kugel 20 ist jeweils ein Kugelsegment abgetragen, so dass zwischen zwei planen bzw. ebenen Flächen 42, 44 eine Kugelzone verbleibt, wie es aus Fig. 1 und 3 hervorgeht. Diese seitlichen Abtragungen 42 und 44 sind symmetrisch zum Kugelmittelpunkt angeordnet und weisen daher einen gleich großen Durchmesser auf, von denen einer in Fig. 1 erkennbar ist. Diese Durchmesser sind kleiner als der Kugeldurchmesser 38. Die Abtragungen 42 und 44 sind ebenflächig oder (planar) ausgebildet.

Die Kugel 20 weist eine zur Kugelzapfenlängsachse 32 senkrechte und durch den Kugelmittelpunkt verlaufende in Fig. 3 schraffiert gezeichnete Querschnittsfläche 48 auf. Diese wird von einem oberen und einem unteren Kreisbahnabschnitt 50 und 52, welche durch die sphärische Oberfläche der Kugel gebildet werden, sowie von einer linken und einer rechten, den Seitenprofilen der Abtragungen 42 und 44 entsprechenden Geraden 54 und 56 begrenzt.

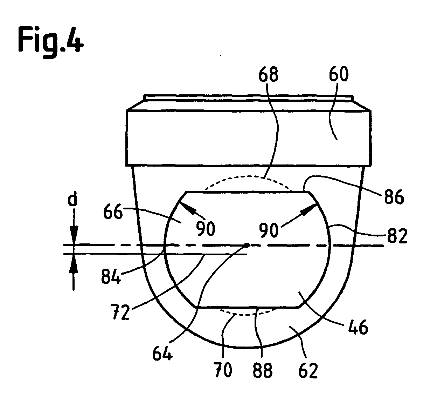

Die Kugelpfanne 14 ist in Fig. 1 in einem Längsquerschnitt sowie in Fig. 4 in einer Draufsicht dargestellt. Die Kugelpfanne 14 enthält einen Flansch 60 und einen an den Flansch 60 angeformten im wesentlichen ringartig ausgebildeten Kugelpfannenkörper 62. Der Flansch 60 besteht aus einer kreisförmigen Platte. Er dient der Befestigung der Kugelpfanne 14 an ein nicht dargestelltes zu lagerndes bzw. zu stützendes Bauteil, beispielsweise eine Stabilisierungsstrebe oder einen Hubzylinder, und weist entsprechende, nicht näher dargestellte Befestigungsmittel auf.

Der Kugelpfannenkörper 62 schließt einen Hohlraum 66 ein. Dieser hat, wie aus der Draufsicht der Fig. 4 ersichtlich, einen länglichen Querschnitt, der durch zwei parallele Geraden 86, 88 und zwei Kreisbahnabschnitte 82, 84 begrenzt ist. Dieser Querschnitt entspricht im wesentlichen dem Kugelquerschnitt 48, welcher anhand der Fig. 3 beschrieben wurde, derart dass die Kugel 20, sofern sie in ihre Montagestellung gebracht wird, axial in den Hohlraum 66 des Kugelpfannenkörpers 62 einführbar ist.

Der durch den Kugelpfannenkörper 62 eingeschlossene Hohlraum 66 ist bereichsweise sphärisch ausgebildet. Insbesondere ist eine obere und eine untere sphärische Lagerfläche 68 und 70 ausgebildet, die über die genannten Geraden 86, 88 hinaus in das Material des Kugelpfannenkörpers 62 eindringen. Diese sphärischen Lagerflächen 68, 70 dienen der Aufnahme, Lagerung und Abstützung der Kugel 20. Zum Einsetzen der Kugel 20 wird diese in ihrer Montagestellung axial in den Hohlraum 66 eingeführt und dann um ca. 90° um die Kugelzapfenlängsachse 32 verdreht. Der Radius der sphärischen Lagerflächen 68, 70 ist auf den Radius der Kugel 20 derart angepasst, dass die in den Hohlraum 66 eingesetzte Kugel 20 mit lediglich geringem Spiel relativ zur Kugelpfanne 14 verschwenkbar und verdrehbar ist. Durch das geringe Spiele ergeben sich vergleichsweise große Anlage- oder Kontaktflächen, so dass hohe Kräfte übertragbar sind.

Der Mittelpunkt 64 der sphärischen Lagerflächen 68, 70 liegt nicht auf der Mittellinie 72 zwischen den beiden Geraden 86, 88, sondern ist um einen Abstand d zu dieser versetzt. Hinsichtlich der beiden Kreisbahnabschnitte 82, 84 nimmt der Kugelmittelpunkt 64 jedoch eine symmetrische Lage ein.

Hierdurch ergeben sich unterschiedlich große obere und untere sphärische Lagerflächen 68 und 70, wie es aus Fig. 4 ersichtlich ist. Der Versatz d macht es aus Montagegründen erforderlich, dass die Kreisbahnabschnitte 82 und 84 insbesondere in ihrem gemäß Fig. 4 oberen Bereich 90 einen größeren Krümmungsradius aufweisen als die Kreisbahnabschnitte 50, 52 des Kugelquerschnitts 48 in Fig. 3. Dies hat zur Folge, dass insbesondere die obere Gerade 86 der Öffnung 46 etwas länger ist als die entsprechende Gerade 54, 56 des Kugelquerschnitt 48. Bei der Montage wird die Kugel 20 zunächst axial in die Montageöffnung 46 eingeführt. Beim Verdrehen in die Arbeitsstellung verschiebt sich die Kugel 20 um den Betrag d, um ihre sphärische Fläche in Übereinstimmung mit der sphärischen Lagerfläche des Kugelpfannenkörpers 62 zu bringen. In der Arbeitsstellung ist keine nennenswerte axiale Relativbewegung zwischen der Kugel 20 und dem Kugelpfannenkörper 62 möglich.

Im beschriebenen Ausführungsbeispiel ist der Hohlraum 66 des Kugelpfannenkörpers 62 zu beiden axialen Seiten offen und weist eine Montageöffnung 46, durch die sich der Kugelzapfen 12 einführen lässt, sowie eine zu dieser gegenüberliegenden weiteren Öffnung 74 auf. Beide Öffnungen 46, 74 sind gleichartig ausgebildet, so dass auch die weitere Öffnung 74 als Montageöffnung dienen kann. Es sei betont, dass es im Unterschied hierzu auch möglich ist, die weitere Öffnung 74 nicht vorzusehen, so dass der Hohlraum 66 auf der zur Montageöffnung 46 gegenüberliegenden Seite verschlossen ist. Hier kann in vorteilhafter Weise ein Hohlraum zur Aufnahme eines Schmiermittels ausgebildet sein.

In seiner Arbeitsstellung lässt sich der Kugelzapfen 12 relativ zu der Kugelpfanne 14 verschwenken, so dass die Achse des Hohlraumes 66 des Kugelpfannenkörpers 62 nicht mehr mit der Kugelzapfenlängsachse 32 fluchtet. An dem Kugelzapfenschaft 18 sind seitlich zwei tonnenförmige Anschläge 92 angeordnet, die dazu dienen, den Neige- oder Schwenkwinkel zu begrenzen. Die Anschläge ragen beidseitig radial über die erste Montageöffnung 46 hinaus und sind auf Höhe der vertikalen Mitte der Kugelzapfenkugel 20 auf dem Kugelzapfenschaft 18 derart angebracht, dass der Kugelpfannenkörper 62 beim Schwenken um eine vertikale in Fig. 3 eingezeichnete Kugelachse 94 gegen die Anschläge schlägt.

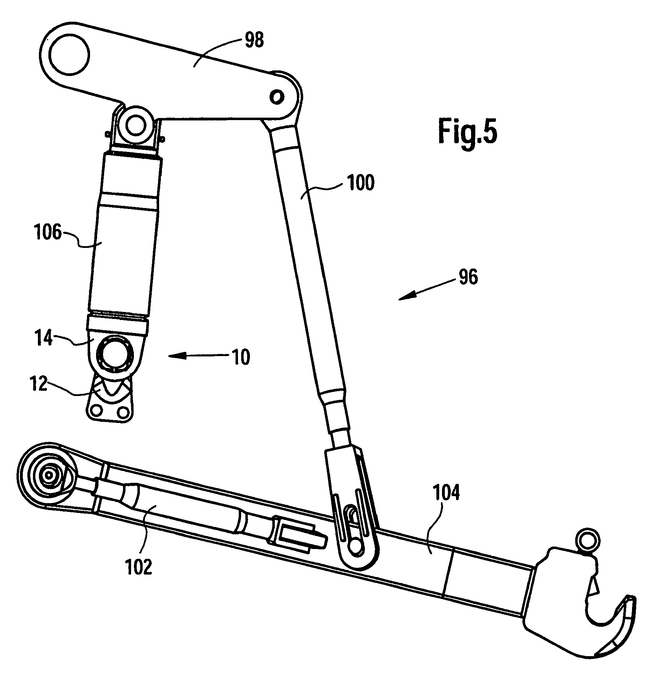

In Fig. 5 ist als Anwendungsbeispiel für das erfindungsgemäße Kugelgelenklager 10 eine Hubvorrichtung 96 dargestellt, die einen Hubarm 98, eine Hubstrebe 100, eine Stabilisierungsstrebe 102, einen Unterlenker 104 und einen Hubzylinder 106 aufweist, und ein erfindungsgemäßes Kugelgelenklager 10 als Verbindungsglied zwischen Hubzylinder 106 und einem nicht dargestellten Fahrzeugrahmen oder Chassis dient. Die Kugelpfanne 14 ist dabei fest mit dem Hubzylinder 106 verbunden und auf einem am Fahrzeugrahmen bzw. Chassis befestigbaren Kugelzapfen 12 gelagert. Die Einsatzmöglichkeiten derartiger Kugelgelenkverbindungen beschränken sich dabei nicht auf das hier dargestellte Anwendungsbeispiel. Insbesondere können auch andere gelenkige Verbindungsstellen der Hubvorrichtung mit erfindungsgemäßen Kugelgelenklagern versehen sein.
Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. So kann beispielsweise, wie erwähnt wurde, auf eine weitere Öffnung 74 in dem Kugelpfannenkörper 62 verzichtet werden. Der Kugelpfannenkörper 62 kann hierbei derart ausgebildet sein, dass er an Stelle der weiteren Öffnung 74 eine weitere sphärische Lagerfläche aufweist. Der Kugelzapfen 12 enthält an Stelle der stirnseitigen Abtragung 40 eine Kugelfläche, die an die weitere sphärische Lagerfläche des Kugelzapfenkörpers angepasst ist und sich an dieser axial abstützt. Es ist auch von Vorteil, eine Schmiernut in dem Kugelzapfen und/oder der Kugelpfanne 14 vorzusehen.

## Patentansprüche

1. Kugelgelenklager, welches einen mit einer Kugel (20) versehenen Kugelzapfen (12) und eine Kugelpfanne (14) enthält, wobei die Kugel (20) wenigstens zwei Abtragungen (42, 44) aufweist, die im Wesentlichen parallel zu einer Kugelzapfenachse (32) verlaufen, und dass die Kugelpfanne (14) einen Hohlraum (66) mit wenigstens zwei als Kugellagerfläche (68, 70) ausgebildete sphärische Teilflächen aufweist, deren Radius im Wesentlichen dem Radius der Kugel (20) entspricht, wobei der Hohlraum (66) über wenigstens eine Montageöffnung (46) mit der Außenfläche der Kugelpfanne (14) in Verbindung steht und der Querschnitt der Montageöffnung (46) im Wesentlichen dem Querschnitt der wenigstens zwei Abtragungen aufweisenden Kugel (20) entspricht und wobei die Kugel (20) mittels einer axialen Bewegung durch die Montageöffnung (46) in den Hohlraum (66) der Kugelpfanne (14) einführbar und durch eine anschließende Drehbewegung in eine axial fixierte Lagerposition bewegbar ist, **dadurch gekennzeichnet, dass** die Montageöffnung (46) der Kugelpfanne (14) außermittig bezüglich des Krümmungsmittelpunktes der sphärischen Teilflächen liegt.

2. Kugelgelenklager nach Anspruch 1, **dadurch gekennzeichnet, dass** die wenigstens zwei Abtragungen (42, 44) gleiche oder verschiedene Abstände zum Kugelmittelpunkt aufweisen.

3. Kugelgelenklager nach einem der Ansprüche 1 oder 2, **dadurch gekennzeichnet, dass** die Abtragungen (42, 44) ebenflächig oder gewölbt ausgebildet sind.

4. Kugelgelenklager nach einem der vorhergehenden Ansprüche, **dadurch gekennzeichnet, dass** der Querschnitt der Montageöffnung (46) der Kugelpfanne (14) im Wesentlichen einem Querschnitt der Kugel (20) entspricht, welcher senkrecht zu den wenigstens zwei Abtragungen (42, 44) durch den Kugelmittelpunkt verläuft.

5. Kugelgelenklager nach einem der vorhergehenden Ansprüche, **dadurch gekennzeichnet, dass** die Kugelpfanne (14) einteilig ausgebildet ist.

6. Kugelgelenklager nach einem der vorhergehenden Ansprüche, **dadurch gekennzeichnet, dass** die Kugelpfanne (14) und/oder die Kugel (20) wenigstens bereichsweise eine gehärtete Oberfläche aufweisen und/oder mit einer Verschleißschicht versehen sind.

7. Kugelgelenklager nach einem der vorhergehenden Ansprüche, **dadurch gekennzeichnet, dass** zwischen Kugel (20) und Kugelpfanne (14) ein Gleitmaterial angeordnet ist.

8. Kugelgelenklager nach einem der vorhergehenden Ansprüche, **dadurch gekennzeichnet, dass** im Bereich des Kugelzapfens (12) außerhalb der Kugel (20) Anschläge (92) angeordnet sind, die wenigstens einen Freiheitsgrad der Kugelpfanne (14) relativ zur Kugel (20) begrenzen.

## Claims

1. A ball joint bearing which includes a ball journal (12), provided with a ball (20), and a ball cup (14), wherein the ball (20) has at least two ablations (42, 44) which extend substantially parallel to a ball journal axis (32), and wherein the ball cup (14) comprises a hollow space (66) with at least two part spherical surfaces formed as ball bearing surfaces (68, 70) whose radius corresponds substantially to that of the ball (20), wherein the hollow space (66) is in communication with the outer surface of the ball cup (14) through at least one assembly opening (46) and the cross-section of the assembly opening (46) corresponds substantially to the cross-section of the ball (20) having at least two ablations and wherein the ball (20) can be introduced into the hollow space (66) of the ball cup (14) through the assembly opening (46) by means of an axial movement and can then be moved into an axially fixed bearing position by a rotary movement, **characterized in that** the assembly opening (46) of the ball cup (14) lies off-centre relative to the centre of curvature of the part spherical surfaces.

2. A ball joint bearing according to claim 1, **characterized in that** the at least two ablations (42, 44) have equal or different distances from the ball centre point.

3. A ball joint bearing according to claim 1 or 2, **characterized in that** the ablations (42, 44) are flat or domed.

4. A ball joint bearing according to any of the preceding claims, **characterized in that** the cross-section of the assembly opening (46) of the ball cup (14) corresponds substantially to a cross-section of the ball (20) which runs through the ball centre point perpendicular to the at least two ablations (42, 44).

5. A ball joint bearing according to any of the preceding claims, **characterized in that** the ball cup (14) is made in one piece.

6. A ball joint bearing according to any of the preceding claims, **characterized in that** the ball cup (14) and/or the ball (20) have an at least locally hardened surface and/or are provided with a wear-resistant coating.

7. A ball joint bearing according to any of the preceding claims, **characterized in that** a slip material is disposed between the ball (20) and the ball cup (14).

8. A ball joint bearing according to any of the preceding claims, **characterized in that** stops (92) are disposed in the region of the ball journal (12) outside the ball (20) and limit at least one degree of freedom of the ball cup (14) relative to the ball (20).

## Revendications

1. Articulation à rotule comportant un pivot sphérique (12) muni d'une sphère (20), et un coussinet sphérique (14), la sphère (20) comportant au moins deux méplats (42, 44) sensiblement parallèles à un axe (32) du pivot sphérique et le coussinet sphérique (14) comportant une cavité (66) avec au moins deux surfaces partielles sphériques, qui constituent les surfaces de roulement (68, 70) et dont le rayon correspond sensiblement à celui de la sphère (20), la cavité (66) étant reliée à la surface extérieure du coussinet sphérique (14) par au moins une ouverture de montage (46), et la section de l'ouverture de montage (46) correspond sensiblement à celle de la sphère (20) comportant au moins deux méplats, et la sphère (20) pouvant être introduite dans la cavité (66) du coussinet sphérique (14) à travers l'ouverture de montage (46) moyennant un mouvement axial et, par un mouvement de rotation consécutif, est déplacée dans un positionnement axial défini, **caractérisée en ce que** l'ouverture de montage (46) du coussinet sphérique (14) est décentrée par rapport au centre de la courbure des surfaces partielles sphériques.

2. Articulation à rotule selon la revendication 1, **caractérisée en ce que** lesdits au moins deux méplats (42, 44) sont disposés à distance égale ou différente du centre de la sphère.

3. Articulation à rotule selon l'une des revendications 1 ou 2, **caractérisée en ce que** les méplats (42, 44) comportent une surface plane ou courbe.

4. Articulation à rotule selon l'une quelconque des revendications précédentes, **caractérisée en ce que** la section transversale de l'ouverture de montage (46) du coussinet sphérique (14) correspond sensiblement à une section transversale de la sphère (20) qui passe par le centre de la sphère perpendiculairement aux deux méplats (42, 44).

5. Articulation à rotule selon l'une quelconque des revendications précédentes, **caractérisée en ce que** le coussinet sphérique (14) est réalisé d'un seul tenant.

6. Articulation à rotule selon l'une quelconque des revendications précédentes, **caractérisée en ce que** le coussinet sphérique (14) et/ou la sphère (20) comportent au moins par zones une surface trempée et/ou une couche résistante à l'usure.

7. Articulation à rotule selon l'une quelconque des revendications précédentes, **caractérisée en ce qu'**un matériau antifriction est disposé entre la sphère (20) et le coussinet sphérique (14).

8. Articulation à rotule selon l'une quelconque des revendications précédentes, **caractérisée en ce que**, dans la zone du pivot sphérique (12) en dehors de la sphère (20) sont disposées des butées (92) qui limitent au moins un degré de liberté du coussinet sphérique (14) par rapport à la sphère (20).
